Europäisches Patentamt

European Patent Office

Office européen des brevets

(19)

(11) Veröffentlichungsnummer: **0 004 578**
**B1**

(12) **EUROPÄISCHE PATENTSCHRIFT**

(45) Veröffentlichungstag der Patentschrift: **28.04.82**

(21) Anmeldenummer: **79100764.4**

(22) Anmeldetag: **14.03.79**

(51) Int. Cl.³: **C 08 J 9/14, C 08 L 25/04, C 08 K 3/22**

(54) Granulat, enthaltend Styrolpolymerisat und Aluminiumhydroxid, und Verfahren zur Herstellung flammwidriger Styrolpolymerisatschäume.

(30) Priorität: **18.03.78 DE 2811951**

(43) Veröffentlichungstag der Anmeldung:
**17.10.79 Patentblatt 79/21**

(45) Bekanntmachung des Hinweises auf die Patenterteilung:
**28.04.82 Patentblatt 82/17**

(84) Benannte Vertragsstaaten:
**BE CH DE FR GB IT NL SE**

(56) Entgegenhaltungen:
DE - A - 2 623 112
US - A - 3 547 838

CHEMICAL ABSTRACTS, Vol. 84, Nr. 22, 31. Mai 1976,
Columbus, Ohio, USA,

MURAI ROKURO et al.: "Fire resistant synthetic wood", Seite 62 linke Spalte, Zusammenfassung Nr. 151791u

CHEMICAL ABSTRACTS, Vol. 82, Nr. 16, 21. April 1975,
Columbus, Ohio, USA,

(73) Patentinhaber: **HOECHST AKTIENGESELLSCHAFT**
**Postfach 80 03 20**
**D-6230 Frankfurt/Main 80 (DE)**

(72) Erfinder: **Mylich, Wolfgang**
**Billtalstrasse 38**
**D-6231 Sulzbach (DE)**
Erfinder: **Albert, Walter, Dr.**
**Carl-von-Weinberg-Strasse 4**
**D-6000 Frankfurt/Main (DE)**

(56) Entgegenhaltungen:
HARADA YOSHIAKI et al.: "Fire resistant polystyrene foams", Seite 78, rechte Spalte, Zusammenfassung Nr. 99399q

CHEMICAL ABSTRACTS, Vol. 80, Nr. 18, 6. Mai 1974,
Columbus, Ohio, USA,

SHIMIZU ITSUO et al.: "Fire resistant resin compositions", Seite 33, linke Spalte, Zusammenfassung Nr. 96783H

CHEMICAL ABSTRACTS, Vol. 83, Nr. 22, 1. Dezember 1975,
Columbus, Ohio, USA,

KAMAZA SOICHI et al.: "Coated inorganic fillers", Seite 92, linke Spalte, Zusammenfassung Nr. 180790c

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**0 004 578**

Granulat, enthaltend Styrolpolymerisat und Aluminiumhydroxid, und Verfahren zur Herstellung flammwidriger Styrolpolymerisatschäume .

Die Erfindung betrifft flammwidrige Polystyrolschäume, die im Brandfall keine toxischen oder korrosiven Gase und keinen Rauch abgeben.

Flammwidrige Polystyrolmassen werden bisher überwiegend durch Zusatz organischer Halogenverbindungen, meist in Kombination mit synergistischen Radikalbildern oder Antimontrioxid hergestellt. Obwohl diese Mischungen eine befriedigende Flammwidrigkeit besitzen, haben sie den Nachteil, daß sie im Brandfall toxische und korrosive Gase und stark rußenden Rauch entwickeln (vgl. z.B. DE - A 24 57 980).

Es wurde deshalb bereits vorgeschlagen, organische Polymere durch Zusatz von wasserhaltigen Füllstoffen, z.B. Aluminiumhydroxid, flammfest auszurüsten (vgl. z.B. DE - A 24 57 980). Obwohl man damit Mischungen erhält, die auch im Brandfall keinerlei toxische oder korrosive Gase abgeben und die fast keine Rauchentwicklung zeigen und somit umweltfreundlich sind, haben sich solche Mischungen bisher in der Praxis nicht durchsetzen können. Um den heutigen Anforderungen an die Flammwidrigkeit, z.B. im Bau, zu entsprechen, ist ein so hoher Zusatz an wasserhaltigem Füllstoff erforderlich, daß die Mischungen nicht mehr zufriedenstellend verarbeitet werden können.

So erhält man z.B. bei Polystyrol erst bei Zusatz von etwa 200% Aluminiumhydroxid, bezogen auf das Polystyrol, eine ausreichende Flammwidrigkeit. Die Extrusion so hoch gefüllter Mischungen führt aber zu Formkörpern mit rauher, rissiger Oberfläche und schlechten mechanischen Eigenschaften.

Es wurde nun gefunden, daß sich ausgezeichnete flammwidrige Styrolpolymerisatschäume herstellen lassen, wenn vorgefertigte granulierte Mischungen aus 100 Gew.-Teilen Polystyrol und 150 bis 250 Gew.-Teilen Aluminiumhydroxid einer Korngröße von 20 bis 100 $\mu$m und einer spezifischen Oberfläche unter 1,0 m²/g in einem Extruder aufgeschmolzen, mit 3 bis 15 Gew.-%, bezogen auf die Mischung, eines physikalischen Treibmittels mit einem Siedepunkt im Bereich von 273 bis 323 K begast und zu einem Schaumkörper extrudiert werden.

Gegenstand der Erfindung sind Granulate, enthaltend Styrolpolymerisat und Aluminiumhydroxid, die dadurch gekennzeichnet sind, daß sie aus 100 Gew.-Teilen Styrolpolymerisat, 150 bis 250, vorzugsweise 175 bis 225, Gew.-Teilen Aluminiumhydroxid einer Korngröße von 20 bis 100, vorzugsweise 40 bis 80, $\mu$m, und einer spezifischen Oberfläche unter 1,0 m²/g, vorzugsweise 0,1 bis 0,5 m²/g, und 0 bis 30, vorzugsweise 0 bis 10, Gew.-Teilen bekannter Flammschutzmittel bestehen.

Gefunden wurde außerdem ein Verfahren zur Herstellung flammwideriger Styrolpolymerisatschäume, das dadurch gekennzeichnet ist, daß das vorstehend definierte Granulat in einem Extruder aufgeschmolzen, mit 3 bis 15 Gew.-%, bezogen auf die Mischung, eines physikalischen Treibmittels mit einem Siedepunkt im Bereich von 273 bis 323 K begast und nach guter Durchmischung zu einem Schaumkörper extrudiert wird.

Man erhält mit diesem Verfahren besonders feinzelligen Schaum, der nicht nur eine ausgezeichnete Flammwidrigkeit, sondern auch eine glatte Oberfläche und gute mechanische Eigenschaften hat. Überraschend ist, daß trotz des hohen Füllstoffanteils Dichten unter 100 g/l erreicht werden können.

Als Styrolpolymerisat können Homopolystyrol, Copolymerisate des Styrols, z.B. Styrol-Acrylnitril-Copolymerisate, Styrol-Methyl(meth)acrylat-Copolymerisate, Acrylnitril-Butadien-Styrol-Terpolymere oder mit Kautschuk, z.B. Polybutadien, Styrol-Butadien-Kautschuk oder Äthylen-Propylen-Dien-Kautschuk modifiziertes Polystyrol eingesetzt werden.

Bei Aluminiumhydroxid handelt es sich um ein preiswertes Handelsprodukt, das von verschiedenen Firmen in der gewünschten Korngröße und spezifischen Oberfläche bezogen werden kann. Die spezifische oder BET-Oberfläche wird bestimmt nach Brunauer, Emmet und Teller, J. Amer. Chem. Soc. *60*, (1938), S. 309.

Es ist oft vorteilhaft, Aluminiumhydroxide unterschiedlicher Korngrößen zusammen zu verwenden, z.B. Mischungen von 70 bis 30 Gew.-Teilen Al(OH)$_3$ mit Korngrößen von 20 bis 30 $\mu$m mit 30 bis 70 Gew.-Teilen von Al(OH)$_3$ mit Korngrößen von 70 bis 80 $\mu$m. Durch Verwendung von Aluminiumhydroxid, das mit Fettsäuren oder fettsauren Salzen, z.B. Stearinsäure, Zinkstearat oder Calciumoleat, beschichtet ist, kann das Einmischen und Homogenisieren erleichtert werden.

Als ggf. zusätzlich einzusetzende bekannte Flammschutzmittel eignen sich organisch Halogen- oder Phosphorverbindungen, Ammoniumsulfate oder -phosphate oder vorzugsweise roter Phosphor. Bei Zusatz von 2 bis 5 Gew.-Teilen rotem Phosphor wird die Flammwidrigkeit schon deutlich verbessert. Um eine Phosphorwasserstoffbildung bei Einwirkung von Feuchtigkeit möglichst zu verhindern, wird vorzugsweise. Phosphor eingesetzt, der vorher phlegmatisiert, z.B. mit Aluminiumhydroxid beschichtet oder in einen thermoplastischen Kunststoff, z.B. Polystyrol, eingearbeitet worden ist. Geeignete organische Halogenverbindungen sind z.B. Chlorparaffin, Decabromdiphenyl, Decabromdiphenyläther, Pentabromphenylallyläther, 2,2-Bis-[4-(2,3-dibrompropoxy)-3,5-dibromphenyl]propan, Pentabrommonochlorcyclohexan, Hexabromcyclododecan oder Octabromhexadecan. Gegebenenfalls können auch geringe Mengen Antimontrioxid oder synergistische Radikalbildner, z.B. Peroxide, zugegeben werden. Geeignete Phosphorverbindungen sind z.B. Trisdibrompropylphosphat, Mono- oder Di-nonylphenyltetraglykolätherphosphat.

**0 004 578**

Die Flammwidrigkeit kann weiterhin durch Zugabe von verkohlungsfördernden Mitteln verbessert werden. Als verkohlungsfördernde Mittel eignen sich chemische Verbindungen oder Gemische, die bei der Entzündungstemperatur eine schützende Kohlestruktur, beispielsweise durch Vernetzung, Schmelzen oder Weichwerden unter Vergrößerung ihrer Masse oder durch eine andere chemische Reaktion oder physikalische Veränderung ausbilden, z.B. Harnstoff-Formaldehydharze, Melamin-Formaldehydharze, Melaminphosphat, Phthalsäureanhydrid, Pyromellitsäureanhydrid, Natriumborat, Calciumborat, Zinkborat oder Borsäure. Das verkohlungsfördernde Mittel wird vorzugsweise vor der Granulierung mit den übrigen Zuschlägen im schnellaufenden Mischer in Mengen von 3 bis 15 Gew.-Teilen zugegeben. Bevorzugt wird die Verwendung von Melaminharz in ausgehärteter, pulverisierter Form.

Als physikalische Treibmittel können Kohlenwasserstoffe, wie Pentan oder vorzugsweise halogenierte Kohlenwasserstoffe, z.B. Monofluortrichlormethan, Monofluordichlormethan, 1,2,2-Trifluor-1,1,2-trichloräthan, oder 1,1,2,2-Tetrafluor-1,2-dichloräthan verwendet werden. Es ist selbstverständlich auch möglich, Mischungen dieser Halogenkohlenwasserstoffe untereinander oder mit anderen, deren Siedepunkte unter 273 K liegen, z.B. Difluordichlormethan, einzusetzen.

Zur Herstellung des Ausgangsgranulates wird das Polystyrol vorzugsweise mit den Zuschlägen in einem schnellaufenden Mischer vorgemischt, dann in einem Doppelschneckenextruder aufgeschmolzen, als Strang extrudiert und in einem Heißschmelzgranulator zerkleinert. Die Temperatur der Schmelze sollte dabei 473 K nicht, oder höchstens kurzzeitig, überschreiten, um eine vorzeitige Wasserabspaltung zu vermeiden. Dieses Granulat wird dann in einem Eingasextruder mit einer Schnecke von vorzugsweise mindestens 20 D Schneckenlänge, einem Eingasdoppelschneckenextruder oder einem Tandem-Extruder erneut aufgeschmolzen, mit dem physikalischen Treibmittel begast und nach guter Homogenisierung ausgestoßen und aufgeschäumt.

Je nach den gewünschten Eigenschaften des Schaums und der beabsichtigten Anwendung können übliche Zusatzstoffe wie Stabilisatoren, z.B. phenolische Antioxidantien, Gleitmittel, z.B. Zink- oder Calciumstearat, Wachse oder Weißöle, Antistatika, z.B. Natriumparaffinsulfonate, Pigmente oder Farbstoffe zugesetzt werden.

Das erfindungsgemäße Verfahren eignet sich vor allem zur Herstellung von Profilen oder Platten, wie sie z.B. im Bau für Isolierzwecke verwendet werden.

## Beispiele

### Beispiel 1

20 kg eines Polystyrols mit einer reduzierten spezifischen Viskosität (RSV) von 1,18 dl/g, gemessen an einer 1%igen Lösung in Toluol bei 293 K im Ubbelohde-Viskosimeter, und einem Schmelzindex (gemäß DIN 53735) MFI 200/5 von 4 g/10 min. wurden in einem Pulvermischer mit schnellaufendem Rührer 2 Minuten mit 0,04 kg n-Octadecyl-$\beta$-(4'-hydroxy-3',5'-di-tert.-butylphenyl) propionat und 0,4kg Zinkstearat vermischt und anschließend nach Zugabe von 40 kg Al(OH)$_3$ (Korngröße 60 $\mu$m, BET-Oberfläche 0,1 m²/g) nochmals 2 Minuten gemischt. Die Mischung wurde auf einem Doppelschneckenextruder (Werner & Pfleiderer ZSK 53) aufgeschmolzen. Die Schnecke lief mit 120 U/min. Die Temperatur des Extruders wurde von 453 K am Einzug steigend auf 468 K an der Düse eingestellt. Die Massetemperatur betrug 468—478 K. Aus einer Schlitzdüse wurde ein unregelmäßiges, rauhes und aufspringendes Schmelzenband direkt in einen Heißschmelzgranulator extrudiert und darin zerkleinert.

Das so hergestellte Granulat wurde in einem Tandem-Extruder mit einem Plastifizier- und Eingasextruder (Durchmesser 60 mm) und einem Kühl- und Mischextruder (Durchmesser 90 mm) aufgeschmolzen und mit 8 Gew.-%, bezogen auf die Mischung, Monofluortrichlormethan (Kp 296,92 K) vermischt. Im Eingasextruder wurde die Temperatur von 448 K am Einzug steigend bis auf 473 K am Übergang zum zweiten Extruder eingestellt. Im 2. Extruder wurde zunächst gekühlt und dann an der Düse auf 423 K erwämt. Es wurde eine Lochdüse mit 8 mm Durchmesser verwendet. Der austretende Strang expandierte sofort hinter der Düse zu einem glatten, gleichmäßigen Schaumstrang von 31 mm Durchmesser. Die Dichte betrug 90 g/l. Der Strang hatte eine sehr feine, gleichmäßige Schaumstruktur.

Ein 40 cm langer Strang wurde von schräg unten in einem Winkel von 45° mit einer entleuchteten Flamme eines Bunsenbrenners beflammt. Der Strang brannte schwach im Flammenbereich, unter sehr geringer Rauchentwicklung und ohne Bildung toxischer oder korrosiver Gase. Abtropfende Stücke verlöschten rasch. Oberhalb der Flamme verblieben etwa 30 cm des Stranges, ohne weiter zu brennen. Das untere Ende war spitz verformt und bestand praktisch nur noch auf leicht rußigem Al$_2$O$_3$.

### Beispiele 2—10

Beispiel 1 wurde mit wechselnden Mengen Al(OH)$_3$ mit unterschiedlichen Korngrößen und Oberflächen wiederholt. Um das Brandverhalten zu bestimmen, wurden Probekörper mit den Abmessungen 10 × 3 × 3 cm, die aus den Strängen geschnitten wurden, waagerecht eingespannt und an der Vorderkante mit der entleuchteten Bunsenflamme 3 sec beflammt. Die mittlere Nachbrennzeit von fünf Prüf-

3

**0 004 578**

körpern wurde bestimmt. Die Zusammensetzung der Stränge und die Ergebnisse der Brandversuche zeigt Tabelle I.

Beispiele 11—21

Beispiele 4—6 wurden wiederholt unter zusätzlicher Zugabe verschiedener bekannter Flammschutzmittel. Zusammensetzung und Brandverhalten zeigt Tabelle II.

TABELLE I

| Beispiel | Polystyrol Gew.-Teile | Al(OH)$_3$ Korngröße $\mu$m | Al(OH)$_3$ spez. Oberfläche m$^2$/g | Al(OH)$_3$ Gew.-Teile | mittlere Nachbrennzeit sek. |
|---|---|---|---|---|---|
| 2 * | 100 | 60 | 0,1 | 100 | brennt weiter |
| 3 * | 100 | 60 | 0,1 | 125 | brennt weiter |
| 4 | 100 | 60 | 0,1 | 150 | brennt weiter |
| 5 | 100 | 60 | 0,1 | 175 | 12 |
| 6 | 100 | 60 | 0,1 | 200 | 5 |
| 7 | 100 | 60 | 0,1 | 225 | 2 |
| 8 | 100 | 25 / 70 | 0,5 / 0,05 | 140 / 60 | 4 |
| 9 | 100 | 25 / 70 | 0,5 / 0,05 | 100 / 100 | 5 |
| 10 | 100 | 25 / 70 | 0,5 / 0,05 | 60 / 140 | 6 |

* fällt nicht unter den Anspruch.

TABELLE II

| Beipsiel | Polystyrol Gew.-Teile | Al(OH)$_3$ Korngröße $\mu$m | Al(OH)$_3$ spez. Oberfl. m$^2$/g | Al(OH)$_3$ Gew.-Teile | Flammschutzmittel | Flammschutzmittel Gew.-Teile | mittlere Nachbrennzeit sek. |
|---|---|---|---|---|---|---|---|
| 11 | 100 | 60 | 0,1 | 150 | Decabromdi-phenyläther | 15 | 7 |
| 12 | 100 | 60 | 0,1 | 175 | ,, | 10 | 4 |
| 13 | 100 | 60 | 0,1 | 200 | ,, | 5 | 2 |
| 14 | 100 | 60 | 0,1 | 200 | roter Phosphor | 2 | 2 |
| 15 | 100 | 60 | 0,1 | 200 | ,, | 5 | 1 |
| 16 | 100 | 60 | 0,1 | 200 | Melaminharz | 10 | 4 |
| 17 | 100 | 60 | 0,1 | 200 | ,, | 15 | 4 |
| 18 | 100 | 60 | 0,1 | 200 | roter Phosphor Melaminharz | 2 10 | 0 |
| 19 | 100 | 60 | 0,1 | 200 | Ammonium-polyphosphat | 20 | 5 |
| 20 | 100 | 60 | 0,1 | 200 | Ammoniumsulfat | 20 | 4 |
| 21 | 100 | 60 | 0,1 | 200 | ,, | 40 | 2 |

**0 004 578**

Patentansprüche

1. Granulat, enthaltend Styrolpolymerisat und Aluminiumhydroxid, dadurch gekennzeichnet, daß es aus 100 Gew.-Teilen Styrolpolymerisat, 150 bis 250 Gew.-Teilen Aluminiumhydroxid einer Korngröße von 20 bis 100 μm und einer spezifischen Oberfläche unter 1,0 m²/g, und 0 bis 30 Gew.-Teilen bekannter Flammschutzmittel besteht.

2. Granulat nach Anspruch 1, dadurch gekennzeichnet, daß es 175 bis 225 Gew.-Teile Aluminiumhydroxid enthält.

3. Granulat nach Anspruch 1 oder 2, dadurch gekennzeichnet, daß das Aluminiumhydroxid eine Korngröße von 40 bis 80 μm hat.

4. Granulat nach Anspruch 1 bis 3, dadurch gekennzeichnet, daß das Aluminiumhydroxid eine spezifische Oberfläche von 0,1 bis 0,5 m²/g hat.

5. Granulat nach Anspruch 1 bis 4, dadurch gekennzeichnet, daß es 0 bis 10 Gew.-Teile bekannter Flammschutzmittel enthält.

6. Granulat nach Anspruch 1 bis 5, dadurch gekennzeichnet, daß es organische Halogenverbindungen als bekannte Flammschutzmittel enthält.

7. Granulat nach Anspruch 1 bis 5, dadurch gekennzeichnet, daß es roten Phosphor als bekanntes Flammschutzmittel enthält.

8. Granulat nach Anspruch 1 bis 5, dadurch gekennzeichnet, daß es Ammoniumsulfat als bekanntes Flammshutzmittel enthält.

9. Granulat nach Anspruch 1 bis 8, gekennzeichnet, daß es zusätzlich 3 bis 15 Gew.-Teile eines verkohlungsfördernden Mittels enthält.

10. Granulat nach Anspruch 1 bis 9, gekennzeichnet, daß das verkohlungsfördernde Mittel ein ausgehärtetes und pulverisiertes Melaminharz ist.

11. Granulat nach Anspruch 1 bis 10, dadurch gekennzeichnet, daß das Aluminiumhydroxid mit Fettsäuren oder fettsauren Salzen beschichtet ist.

12. Granulat nach Anspruch 11, dadurch gekennzeichnet, daß das Aluminiumhydroxid mit Stearinsäure oder Zinkstearat oder Calciumoleat beschichtet ist.

13. Verfahren zur Herstellung flammwidriger Styrolpolymerisatschäume, dadurch gekennzeichnet, daß ein Granulat nach Anspruch 1 bis 12 in einem Extruder aufgeschmolzen, mit 3 bis 15 Gew.%, bezogen auf die Mischung, eines physikalischen Treibmittels mit einem Siedepunkt im Bereich von 273 bis 323 K begast und nach guter Durchmischung zu einem Schaumkörper extrudiert wird.

14. Verfahren nach Anspruch 13, dadurch gekennzeichnet, daß als physikalisches Treibmittel Monofluortrichlormetan verwendet wird.

**Claims**

1. A granular mixture consisting of 100 parts by weight of styrene polymer and 150 to 250 parts by weight of aluminium hydroxide having a grain size of from 20 to 100 μm and a specific surface of below 1.0 m²/g, and containing from 0 to 30 parts by weight of known flameproofing agents.

2. The granular mixture as claimed in claim 1, wherein the mixture contains 175 to 225 parts by weight of aluminium hydroxide.

3. The granular mixture as claimed in claims 1 and 2, wherein the aluminium hydroxide has a grain size of from 40 to 80 μm.

4. The granular mixture as claimed in claims 1 to 3, wherein the aluminium hydroxide has a specific surface of from 0.1 to 0.5 m²/g.

5. The granular mixture as claimed in claims 1 to 4, wherein the mixture contains 0 to 10 parts by weight of known flameproofing agents.

6. The granular mixture as claimed in claims 1 to 5, wherein the mixture contains organic halogen compounds as the known flameproofing agents.

7. The granular mixture as claimed in claims 1 to 5, wherein the mixture contains red phosphorus as the known flameproofing agent.

8. The granular mixture as claimed in claims 1 to 5, wherein the mixture contains ammonium sulfate as the known flameproofing agent.

9. The granular mixture as claimed in claims 1 to 8, wherein the mixture contains 3 to 15 parts by weight of a carbonizing agent.

10. The granular mixture as claimed in claims 1 to 9, wherein the carbonizing agent is a hardened and pulverized melamine resin.

11. The granular mixture as claimed in claims 1 to 10, wherein the aluminium hydroxide is coated with fatty acids or fatty acid salts.

12. The granular mixture as claimed in claims 1 to 11, wherein the aluminium hydroxide is coated with stearic acid or zinc stearate or calcium oleate.

13. A process for the manufacturing of flameproof styrene polymer foams which comprises melting in an extruder a granular mixture as claimed in claims 1 to 12, gassing the molten mixture with 3 to 15% by weight, relative to the mixture, of a physical expanding agent having a boiling point in the

7

**0 004 578**

range of from 273 to 323 K, and, after thorough homogenization, extruding the gassed molten mixture to obtain foamed articles.

14. The process as claimed in claim 13, wherein monofluorotrichloromethane is used as the physical expanding agent.

## Revendications

1. Produit granulé contenant un polymère du styrène et de l'hydroxyde d'aluminium, caractérisé en ce qu'il est constitué de 100 parties en poids d'un polymère du styrène, de 150 à 250 parties en poids d'hydroxyde d'aluminium ayant une granularité de 20 à 100 $\mu$m et une surface spécifique inférieure à 1,0 m²/g, et de 0 à 30 parties en poids d'ignifugeants connus.

2. Produit granulé selon la revendication 1 caractérisé en ce qu'il contient de 175 à 225 parties en poids d'hydroxyde d'aluminium.

3. Produit granulé selon l'une des revendications 1 et 2, caractérisé en ce que l'hydroxyde d'aluminium a une granularité de 40 à 80 $\mu$m.

4. Produit granulé selon l'une quelconque des revendications 1 à 3, caractérisé en ce que l'hydroxyde d'aluminium à une surface spécifique de 0,1 à 0,5 m²/g.

5. Produit granulé selon l'une quelconque des revendications 1 à 4, caractérisé en ce qu'il contient de 0 à 10 parties en poids d'ignifugeants connus.

6. Produit granulé selon l'une quelconque des revendications 1 à 5, caractérisé en ce qu'il contient, comme ignifugeants connus, des composés organiques halogénés.

7. Produit granulé selon l'une quelconque des revendications 1 à 5, caractérisé en ce qu'il contient du phosphore rouge comme ignifugeant connu.

8. Produit granulé selon l'une quelconque des revendications 1 à 5, caractérisé en ce qu'il contient du sulfate d'ammonium comme ignifugeant connu.

9. Produit granulé selon l'une quelconque des revendications 1 à 8, caractérisé en ce qu'il contient en outre de 3 à 15 parties en poids d'un agent favorisant la carbonisation.

10. Produit granulé selon l'une quelconque des revendications 1 à 9, caractérisé en ce que l'agent favorisant la carbonisation est une résine mélamine durcie et pulvérisée.

11. Produit granulé selon l'une quelconque des revendications 1 à 10, caractérisé en ce que l'hydroxyde d'aluminium est revêtu d'acides gras ou de sels d'acides gras.

12. Produit granulé selon la revendication 11 caractérisé en ce que l'hydroxyde d'aluminium est revêtu d'acide stéarique ou de stéarate de zinc ou d'oléate de calcium.

13. Procédé de fabrication de mousses en polymère de styrène ignifugées, caractérisé en ce qu'on fond dans une extrudeuse un produit granulé selon l'une quelconque des revendications 1 à 12, on le traite par 3 à 15% en poids, par rapport au mélange, d'un porogène physique ayant un point d'ébullition compris entre 273 et 323 K et, après l'avoir bien mélangé, on l'extrude pour en faire un objet à structure cellulaire.

14. Procédé selon la revendication 13, caractérisé en ce qu'on utilise, comme porogène physique, le monofluoro-trichlorométhane.